(19)

**Europäisches Patentamt**

**European Patent Office**

**Office européen des brevets**

(11) **EP 4 618 442 A1**

(12) **EUROPEAN PATENT APPLICATION**

(43) Date of publication:
**17.09.2025 Bulletin 2025/38**

(21) Application number: **25163441.6**

(22) Date of filing: **13.03.2025**

(51) International Patent Classification (IPC):
**H04B 7/185** (2006.01)    **H04H 20/74** (2008.01)

(52) Cooperative Patent Classification (CPC):
**H04B 7/18565**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **13.03.2024 US 202463564587 P**

(71) Applicant: **ST Engineering iDirect (Europe) Cy NV 9100 Sint-Niklaas (BE)**

(72) Inventors:
- **DUYCK, Dieter**
  **9100 Sint-Niklaas (BE)**
- **VAN WONTERGHEM, Johannes**
  **9880 Aalter (BE)**
- **DELARUELLE, Daniel**
  **9100 Sint-Niklaas (BE)**
- **DUPUY, Arthur**
  **79400 Saint Maixent l'Ecole (FR)**

(74) Representative: **Winger**
**Mouterij 16 bus 101**
**3190 Boortmeerbeek (BE)**

(54) **TRANSMITTER FOR A SATELLITE COMMUNICATION SYSTEM**

(57)    The present invention relates to a transmission system arranged for generating data traffic to be transmitted. The transmission system comprises :
- encoding and modulation means for encoding and mapping a plurality of frames whereby in each frame a set of information bits of the data traffic is encapsulated, each frame being associated with a first modulation order and a coding rate, to a plurality of frames of encoded and modulated symbols,
- physical layer framing means arranged for inserting synchronization symbols taken from a second modulation order into at least one frame of encoded and modulated symbols of said plurality, so obtaining a plurality of physical layer frames.

The transmission system is characterized by comprising expansion means to replace, if the second modulation order is smaller than the first modulation order, at least a subset of the synchronization symbols inserted by the physical layer framing means by symbols from the same constellation as the modulated symbols in the frames of encoded and modulated symbols.

Fig.8

EP 4 618 442 A1

## Description

**Field of the invention**

The present invention is generally related to the field of satellite communication systems. More in particular, it relates to a transmitter system for use in a satellite communication system.

**Background of the invention**

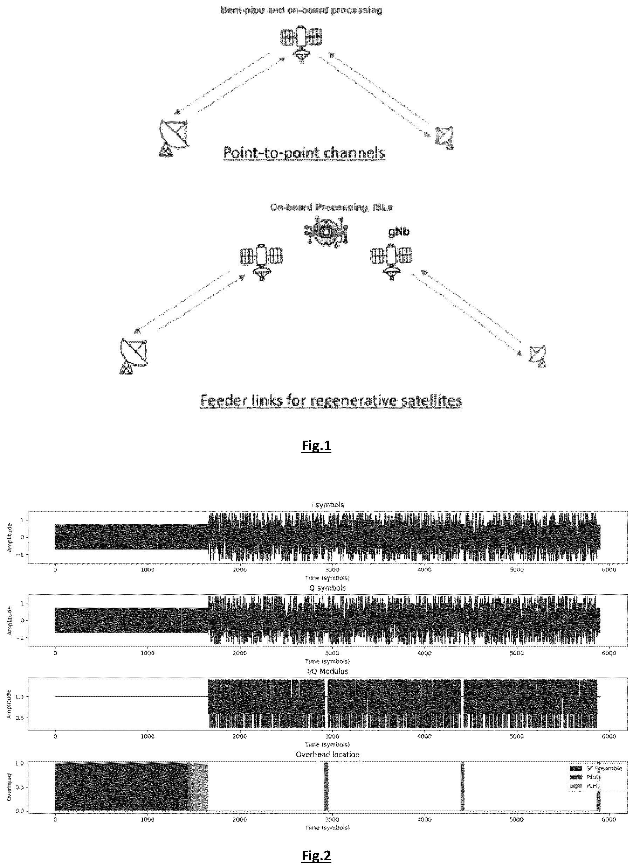

A typical realization of a satellite communication network is based on a star network in which a transmitter at the gateway transmits in the so-called forward (FWD) link via the satellite to one or more terminals. In case of interactive communication, the terminals transmit back in the so-called return (RTN) link via the satellite towards a receiver at the gateway. Without being exhaustive, Fig.1 visualizes by way of example two possible use cases. The shown use cases are point-to-point links and a link from a gateway over a feeder link to a regenerative satellite that demodulates and decodes the signal, after which it is sent to one or more other satellites over inter-satellite links (ISLs). Next, the signal is modulated for the user links to one or more terminals. Such user links can for example be 5G-NR or DVB-RCS2 based. For the point-to-point links or the feeder links, a waveform such as DVB-S2X (see ETSI EN 302 307-2 and ETSI TR 102 376-2) is well suited. Modifications of 5G-NR, DVB-RCS2, or DVB-S2X are possible to address certain requirements, such as security needs.

In general, coded communications are considered in this disclosure, such as in DVB-S2X or DVB-RCS2 or 5G-NR or similar standards or modifications thereof. For instance, in DVB-S2X, forward error correcting (FEC) codewords have a fixed coded length of 64800 (normal) or 16200 (short) bits. Codewords result from encoding a sequence of information bits, which is referred to as a set of encapsulated frames. In DVB-S2X, these encapsulated frames are denoted baseband frames. The coded bits in a codeword are then mapped to a sequence of IQ symbols according to a predefined M-ary constellation, mapping m bits to a single IQ symbol, where m is the binary logarithm of M, denoted $\log_2(M)$. The sequence of IQ symbols mapped from a codeword is in this disclosure denoted as an XFEC frame, matching the notation in DVB-S2X.

To allow receivers to lock on the waveform, in each of these standards or modified versions, a preamble is prepended to such XFEC frames. Receivers know this preamble and can search for it by means of correlations or variations thereof (coherent of non-coherent).

In DVB-S2X, multiple framing types exist, (1) only PLFrames (physical layer frames) or (2) using PLframes and super-frames (DVB-S2X Annex E). The preamble in the PLFrames is denoted as a PLHeader (comprising a known "Start Of Frame" (SOF) sequence and a PLS sequence which comprises information needed to demodulate and decode the payload, such as the type of modulation and coding used). In case of using PLFrames and superframes, next to PLHeaders, also a superframe preamble (comprising a Start Of Superframe (SOSF) sequence) is inserted in the stream of IQ symbols and used for synchronization. Using super-frames can serve many purposes, such as allowing communication to terminals in very low SNR (VLSNR) conditions, allowing an elegant estimation of adjacent channel interference, allowing precoding, beam hopping or slotted communication in general.

Next to the SOSF field, the superframe preamble also contains a superframe format indicator (SFFI), and optionally other elements (such as a superframe header (SFH) in format 5, or an EHF and PLI in format 6). Thus, the superframe preamble contains a large "known" sequence (although depending on configuration), that can be used to acquire (lock on) the waveform.

Both when using super-frame or not, pilot symbols can be inserted as in the stream of I/Q symbols, e.g. for allowing phase and frequency offset tracking at the receiver side.

Such waveforms starting from large codewords are proven to be very spectrally efficient (approaching the Shannon capacity). The present disclosure can be applied to any waveform comprising coded frames mapped to I/Q symbols using a predefined constellation, a preamble and, optionally, pilot symbols, for synchronization.

For higher throughput communications, often more spectrally efficient and thus higher order constellations must be used, e.g. 16APSK or 16QAM, 64APSK or 64QAM and beyond.

In addition, the use of spread spectrum techniques may not be desired to avoid too low effective rates for a given bandwidth. Or put differently, the required effective rate (e.g. the rate after despreading or before spreading in the case of direct sequence spread spectrum (DSSS)) may already occupy a significant part of the Digital-to-Analog Converter (DAC) and as such, spreading it to an even wider bandwidth may not be possible.

Eavesdropping or, in general, unwanted exploitation of the waveform, can be avoided by using TRANSEC concepts. TRANSEC (Transmission Security) is a part of COMSEC (Communications Security). COMSEC is a broad discipline that encompasses various measures to protect communications from unauthorized access and interception. TRANSEC, in particular, aims at protecting transmissions from interception and exploitation. Note that adversaries can exploit the transmission, even without defeating encryption. TRANSEC comes with a set of techniques to reduce the risk of such exploitation, e.g. hide "when" communication is occurring (e.g., by always filling the channel) or hide "the type" of communication or hide "the direction" (who is talking to whom) or hide "the location" of the terminal obscuring the signal making it more difficult to jam it, to acquire it (i.e., lock on it) and to demodulate. For instance, this can be achieved by applying unpredictable (also denoted as TRANSEC generated or cipher based) scrambling, or by applying frequency hopping with unpredictable hopping frequencies. For instance, the hopping frequencies or bits required for scrambling are read from a cryptographic module available at the transmitter and receiver, but not available at the eavesdropper.

However, when applying scrambling as in DVB-S2X (which corresponds to applying a rotation) or frequency hopping, the frame structure is still visible, e.g. on an I/Q envelope plot or by means of performing an autocorrelation, as preambles and pilot symbols are still using QPSK modulations, in contrast to payload IQ symbols that can use higher order constellations. Even when the payload also uses QPSK modulations, repeating patterns in preambles can be detected with autocorrelations or variations thereof. Fig.2 shows an I/Q envelope plot and an autocorrelation on a DVB-S2X symbol stream to illustrate that the location of the preamble and pilot sequences can be retrieved.

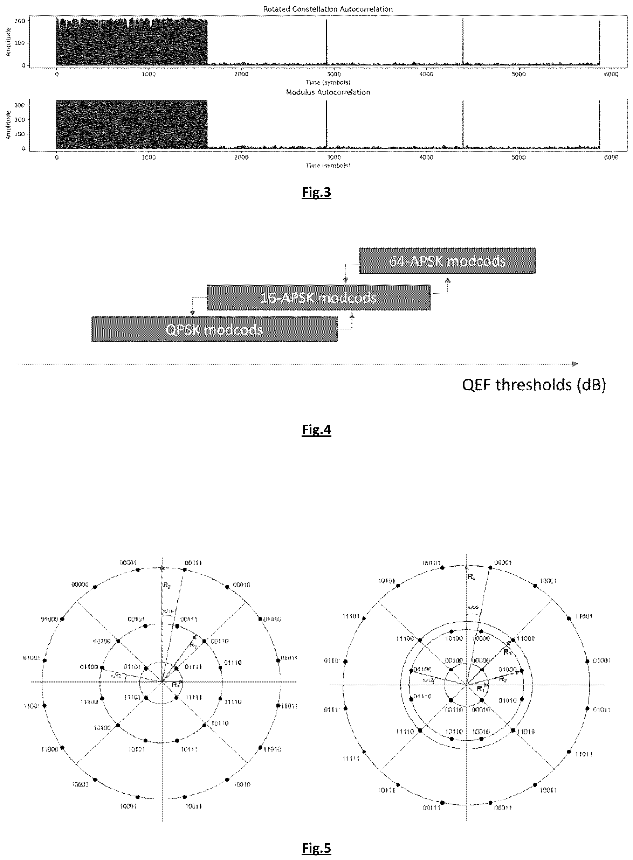

In Fig.2 four plots are shown of (1) the in-phase component I and (2) quadrature component Q and (3) the modulus of a scrambled superframe format 6 64-APSK signal and (4) the location of the preamble and pilot symbols. It is clear that the location of the preamble and pilot symbols, which are QPSK modulated, can be deducted from the I and Q and modulus plots. In other words, Fig.2 shows it is easy to retrieve the location of QPSK symbols when mixed with 64-APSK symbols. Fig.3 shows the autocorrelation on the modulus. This autocorrelation is done with a window of 30 symbols and a step of 5 symbols. In the figure clearly some spike can be seen where the QPSK symbols are, where the preambles and pilots are. There is an obvious need for improvement such that an adversary cannot exploit this. In other words, the improvement would make TRANSEC communication even stronger as also the frame structure cannot be exploited.

Retrieving the frame structure allows adversaries to exploit the waveform for attacks. E.g., it could determine which type of waveform is used (e.g. coded communication as in DVB-S2X), or determine when a new frame starts, or determine whether traffic is being sent or not. Knowing when the frame starts will also make it easier find a way to lock on the waveform. An eavesdropper may dispose of a very large antenna and have better SNRs than the legitimate receiver.

In some cases, TRANSEC scrambling or frequency hopping is not possible, e.g. in the absence of such cryptographic modules. For those cases, it is even more important to hide the frame structure. Hence, there is a need to hide the location of pilots and header, without cryptographic modules, even when using QPSK payload constellation, but even with cryptographic modules in the presence of higher order payload constellations.

Through Adaptive Coding and Modulation (ACM), the modulation and coding (modcod) used typically has a QEF (quasi-error free) threshold not far above the link SNR experienced by the legitimate receiver. When a jammer jams the waveform, the experienced SNR decreases, and the receiver will change the modcod. Just looking at the modulation order (e.g., on a scatter plot), the jammer can get info on the experienced SNR by the legitimate receiver, and thus the jammer can verify whether its jamming is effective. For example, when the modulation order lowers from 16-APSK to 8-PSK, the jammer knows the SNR is around 9 dB (the QEF thresholds of 16APSK 13/18 and 8PSK 5/6 are 10.1 and 9.4 dB, respectively). Next to hiding headers and pilots, there is also a need to avoid link exploitation due to ACM.

Hence, there is a need for solutions wherein headers and pilots are better hidden and better protected against adversaries.

## Summary of the invention

It is an object of embodiments of the present invention to provide for a transmitter system for a satellite communication system, wherein the transmitted signals are better protected against eavesdropping.

The above objective is accomplished by the solution according to the present invention.

In a first aspect the invention relates to a transmission system arranged for generating data traffic to be transmitted to one or more earth station receivers of a satellite communication system. The transmission system comprises :

- encoding and modulation means for encoding and mapping a plurality of frames whereby in each frame a set of information bits of said data traffic is encapsulated and each frame is associated with a first modulation order and a coding rate, to a plurality of frames of encoded and modulated symbols,
- physical layer framing means arranged for inserting synchronization symbols taken from a second modulation order into at least one of said frames of encoded and modulated symbols of said plurality, so obtaining a plurality of physical layer frames.

The transmission system further comprises expansion means to replace, if the second modulation order is smaller than the first modulation order, at least a subset of the synchronization symbols inserted by the physical layer framing means by symbols from the same constellation as the modulated symbols in the frames of encoded and modulated symbols.

The proposed solution indeed allows for better protection against eavesdroppers. By using the same constellation for the synchronization symbols as for the payload (i.e., the encoded and modulated symbols) it becomes much more difficult for an adversary to derive information from monitoring the received symbols. Therefore, in case the modulation order used for inserting the synchronization symbols is smaller than the modulation order used for the plurality of frames of encoded and modulated symbols, an expansion is performed by the expansion means provided in the transmission system, whereby at least a subset of the synchronization symbols is replaced by symbols from the same constellation as the modulated symbols in the frames of encoded and modulated symbols.

In a preferred embodiment the symbols replacing the synchronization symbols are in a same quadrant as the synchronization symbols.

Advantageously the expansion means is arranged to ensure, when replacing the synchronization signals by symbols from the same constellation as the encoded and modulated symbols, that an average phase value of the symbols equals the average phase of the synchronization signals prior to said replacing.

In a preferred embodiment the constellation is quadrant symmetric.

In some embodiments the expansion means is arranged to ensure that the average phase value of a first subset of said symbols replacing said synchronization symbols equals the phase of said first subset prior to the expansion and that the average phase value of a second subset of said symbols replacing said synchronization symbols equals the phase of said second subset prior to the expansion.

In preferred embodiments the transmission system comprises scrambling means to perform a scrambling operation on at least one physical layer frame of the plurality of physical layer frames before or after replacing the synchronization symbols. Advantageously the scrambling means is arranged for generating a new scrambling every frame, based on a frame ID and a secret key.

In one embodiment the expansion means is arranged to generate said symbol from the same constellation as said the modulated symbols by making use of a secure generator to produce additional bits.

In some embodiments the expansion means is arranged to generate the symbol from the same constellation as said encoded and modulated symbols by making use of one or more pre-generated sequences to produce additional bits needed to select a symbol from said constellation. Advantageously, the expansion means is then arranged to store one or more pre-generated sequences.

In another embodiment the transmission system is arranged to perform a random permutation to randomize the pre-generated sequence.

In one embodiment the encoding and modulation means is arranged to use a same M-ary constellation for modulation regardless of said coding rate.

In an advantageous embodiment the transmission system comprises baseband shaping and quadrature modulation means arranged for receiving a version of said plurality of physical layer frames and for modulating I/Q symbols inside said version of said physical layer frames on a waveform at a configured symbol rate, thereby obtaining a signal to be transmitted, said transmission system further arranged to fill a stream of said frames of encoded and modulated symbols with one or more fill frames using a same constellation as the last frame of encoded and modulated symbols that was not a fill frame, when there is not enough traffic to reach said configured symbol rate.

In another aspect the invention relates to a satellite communication system comprising a transmission system as previously described and one or more earth station receivers.

In a preferred embodiment at least one of said earth station receivers is adapted to undo said replacing said at least one synchronization symbol by said symbol from the same constellation as the encoded and modulated symbols.

In some embodiments at least one of the earth station receivers is adapted to correct a useful signal level estimation on a pre-generated sequence used to produce additional bits.

In one embodiment the correction is performed via a pre-computed correction factor. In another embodiment the correction is performed by averaging out a level estimate over multiple sequences of known synchronization symbols.

For purposes of summarizing the invention and the advantages achieved over the prior art, certain objects and advantages of the invention have been described herein above. Of course, it is to be understood that not necessarily all such objects or advantages may be achieved in accordance with any particular embodiment of the invention. Thus, for example, those skilled in the art will recognize that the invention may be embodied or carried out in a manner that achieves or optimizes one advantage or group of advantages as taught herein without necessarily achieving other objects or advantages as may be taught or suggested herein.

The above and other aspects of the invention will be apparent from and elucidated with reference to the embodiment(s) described hereinafter.

**Brief description of the drawings**

The invention will now be described further, by way of example, with reference to the accompanying drawings, wherein like reference numerals refer to like elements in the various figures.

　　Fig.1 illustrates two exemplary use cases of a satellite communication network with interactive communication.

　　Fig.2 illustrates plots of the (1) I, (2) Q components and (3) the modulus of a scrambled superframe format 6 64-APSK signal and (4) the location of the preamble and pilot symbols.

　　Fig.3 illustrates the autocorrelation on the modulus.

　　Fig.4 illustrates the hysteresis used for the transition between modulation orders.

　　Fig.5 illustrates two 32-APSK constellations used in DVB-S2X.

Fig.6 illustrates some possible implementations of embodiments wherein a scrambling operation is performed.

Fig.7 illustrates an 8-PSK constellation with one possible labelling.

Fig.8 illustrates, per quadrant, the constellation points to which a synchronization symbol can be expanded.

Fig.9 illustrates a 16-APSK constellation with one possible labelling.

Fig.10 illustrates, per quadrant, the constellation points to which a synchronization symbol can be expanded.

Fig.11 illustrates the probability of missed detection and probability of false alarm, with and without expansion, for a 16-APSK (upper part) and 32-APSK (lower part) constellation.

Fig.12 illustrates the (1) I, (2) Q components and (3) the modulus of a scrambled superframe format 6 64-APSK signal with expanded synchronization symbols, according to the invention, and (4) the location of the preamble and pilot symbols.

Fig.13 illustrates the autocorrelation and the modulus autocorrelation of a superframe format 6 64-APSK signal with expanded synchronization symbols according to the invention.

Fig.14 illustrates an average spectrum at the input of the CMA equalizer.

Fig.15 illustrates the average spectrum at the output of the CMA equalizer.

Fig.16 illustrates the frequency response to which the CMA equalizer converges.

## Detailed description of illustrative embodiments

The present invention will be described with respect to particular embodiments and with reference to certain drawings but the invention is not limited thereto but only by the claims.

Furthermore, the terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

It should be noted that the use of particular terminology when describing certain features or aspects of the invention should not be taken to imply that the terminology is being redefined herein to be restricted to include any specific characteristics of the features or aspects of the invention with which that terminology is associated.

In the description provided herein, numerous specific details are set forth. However, it is understood that embodiments of the invention may be practiced without these specific details. In other instances, well-known methods, structures and techniques have not been shown in detail in order not to obscure an understanding of this description.

Below the invention is explained in detail, often using DVB-S2X as an example. The invention is however not limited thereto : for example also DVB-RCS2 or proprietary return link technologies using pulse-shape filtered are possible. The invention is applicable to waveforms allowing higher order modulations (e.g. 16- or 64-QAM or 16- or 64-APSK) for payload symbols while using QPSK or BPSK for synchronization symbols (such as pilots and preambles). For instance WiMax uses BPSK or QPSK for pilot tones and control information while using higher order modulations for payload symbols. Also 5G-NR uses for instance QPSK modulation for the synchronization signal block (SSB, comprising PSS/SSS and PBCH) and physical downlink control channel (PDCCH) while allowing higher order modulations for data channels (PDSCH and PUSCH).

The encoding and modulation means receive encapsulated frames or baseband frames comprising information bits of the data traffic to be transmitted and generate frames of encoded and modulated symbols. The modulation is also referred to as mapping. In DVB-S2X, the modulation and coding type (or the mapping and coding type) is referred to as MODCOD. The modulation and coding type is also denoted as modcod in the following. As already mentioned, the present invention is, however, not limited to DVB-S2X.

In DVB-S2X, the framing means can generate either only physical layer frames (PLFrames) or superframes (which comprise on their turn (parts of) physical layer frames). It was already mentioned in the background section that the superframes in ETSI EN 302 307-2 and ETSI TR 102 376-2 have a start-of-superframe (SOSF) field, which is used in the terminal receiver to detect the start of a superframe. Next to the SOSF field, the superframe preamble also contains a superframe format indicator (SFFI), and optionally other elements (such as a superframe header (SFH) in format 5, or an EHF and PLI in format 6). Thus, the superframe preamble contains a large "known" sequence (although depending on configuration), that can be used to acquire (lock on) the waveform.

In ETSI EN 302 307-2 V1.2.1 and ETSI TR 102 376-2 V1.2.1 the SOSF and SF-aligned pilot fields are taken from a set of near-orthogonal symbol sequences, known as Walsh-Hadamard (WH) codes optionally plus some padding. There are 256 possible quasi-orthogonal SOSF fields, determined by an SOSF-index (corresponding to a row in a 256-by-256 WH matrix). The per PLFrame physical layer scrambling is not present anymore and organized on a superframe level, denoted two-way scrambling. In two-way scrambling, the SOSF and SF-aligned pilot symbols are scrambled with the reference data scrambler and all other symbols are scrambled with the payload data scrambler.

The transmission system according to this invention aims to make it harder for an adversary to exploit or eavesdrop the waveform. To achieve this, it is required to hide the header and optional pilots, both comprising synchronization symbols which are known symbols to be used for synchronization at the receiver side, and to prevent that information be deducted (such as the operational SNR of the legitimate receiver) from monitoring the received symbols. In 5G, such known symbols are for instance (parts of) the SSB and in WiMAX there are pilot tones for instance. In addition, the invention aims to avoid unnecessary changes between modulation orders as also this can be exploited by an adversary.

A first measure that can be taken is to limit the transitions between modulation orders. Without limiting the invention, an example is considered wherein the following modulation orders are allowed for the payload symbols:

- QPSK (e.g., from an SNR of -10 dB to 6 dB), e.g., from QPSK 1/5 with spreading factor 5 up to QPSK 9/10
- 16-APSK (e.g., from 2 dB to 14 dB) and
- 64-APSK (e.g. from 7 dB to 20 dB).

In another example, also 8-PSK (-1 dB to 11 dB) is used as it has lower peak-to-average power ratios (PAPR).

Clearly, SNR ranges from multiple modulation orders significantly overlap, or, equivalently, efficiency ranges from different modulation orders overlap. This is illustrated in Fig.4 (wherein 8-PSK modcods are not shown in order not to overload the figure). In DVB-S2X, for example, this is also the case, but not with such significant overlaps. For instance, the QPSK modcod with highest spectral efficiency is QPSK 9/10 with a QEF threshold of roughly 6.4 dB. The 16-APSK modcods with the lowest spectral efficiency in DVB-S2 and DVB-S2X are 16-APSK 3/5 and 16-APSK 1/2-L with a QEF threshold of 7.7 dB and 6 dB, respectively. So, in DVB-S2 (DVB-S2X) there is no (only one) 16-APSK constellation with lower QEF threshold than the QPSK modcod with highest spectral efficiency.

In the approach according to this invention, however, 16-APSK modcods are used with much lower FEC rates, e.g., down to 1/4 or 1/5, which allows the transmission system to keep using 16-APSK, even when the SNR decreases below 6 dB, even down to 3 or 2 dB. This is not the most spectral efficient choice, but it provides less information to an adversary.

The same can be said for 64-coding rate modcods. For instance, in DVB-S2X, the 64-APSK modcod with the lowest spectral efficiency is 64-APSK 32/45-L with a QEF threshold of roughly 14 dB, while the 8-PSK modcods with the highest spectral efficiency is 8-PSK 9/10 with a QEF threshold of roughly 11 dB.

However, 64-APSK modcods with much lower FEC rates are used in this invention, e.g. down to 1/4 or 1/5, which allows the transmission system to keep using 64-APSK, even when the SNR decreases below 14 dB, even down to 7 or 8 dB. Also here it is not the most spectral efficient choice, but it provides less information to an adversary.

The transmission system of the invention thus employs modulation orders with modcods with QEF thresholds that overlap significantly with the QEF thresholds of modcods from another modulation order. E.g.,

QPSK modcods can be used up to 6 dB, while 16-APSK modcods can be used down to 2 or 3 dB or even lower. The overlap can be at least 3 dB, or optionally at least 5 dB, even up to 9 dB. Hence, in ACM, a hysteresis loop is used, illustrated by the arrows in Fig.4, so that a transition to a new modulation order due to an SNR change is not immediately followed by a retransition to the initial modulation order upon a slight SNR change in the opposite direction (also referred to as toggling between modulation orders due to SNR jitter). For example, when the SNR is decreasing below an SNR of 2 dB, the transmission system may transition from 16-APSK to QPSK, but it may only transition back to 16-APSK when the SNR increases above 6.4 dB.

The limitation to QPSK, 16-APSK (or 16-QAM) and 64-APSK (or 64-QAM) is exemplary and obviously does not limit the invention. It can as well be QPSK, 32-APSK (or 32-QAM) and 256-APSK (or 256-QAM) for instance, or another set of modulation orders. In the following only APSK is mentioned but this can always be replaced by QAM. Note however that 16-APSK may be preferred over 32-APSK because 32-APSK Gaussian Gray type constellations do not exist in contrast to 16-APSK Gaussian Gray constellations.

In certain standards, such as DVB-S2X, there are multiple possible constellations per modulation order, depending on the coding type, i.e., depending on the FEC coding rate. This is typically true for waveform using APSK constellations. When using QAM modulations, the same constellation is typically used for all coding rates. For instance, Fig.5 shows two 32-APSK constellations used in DVB-S2X, each with a different coding rate. Hence, an adversary can exploit constellation monitoring to get more information on the coding rate and thus on the operational SNR.

To prevent that, in the present invention it is proposed to use for the frames of encoded and modulated symbols only one constellation per modulation order, for all FEC coding rates and thus also for the expansion, as explained further. Also, the ratio of the radii of the different rings should not depend on the FEC rate. So, upon observing a transmission with 16 possible I/Q symbols, the eavesdropper only knows the SNR is between 2 and 14 dB, without any further detail. This results in less feedback for a jammer on how effective its jamming is.

This can be realized in one embodiment by introducing at first new 16-APSK and 64-APSK modcods with lower code rates. For 64-APSK, also some new modcods with higher code rates than in DVB-S2X can be introduced. There are many ways to generate such new modcods, e.g. by means of shaping : geometric shaping and probabilistic shaping. An example of disclosures explaining such shaping is *'Bit-Interleaved Coded Modulation'* (Guillen i Fabregas et al., Foundations and Trends in Comm. and Inform. Theory, Vol. 5, no. 1-2, Jan. 2008). In another embodiment the same goal is achieved by combining existing (e.g. as standardized in DVB-S2X) low rate FEC codes with an existing 16-APSK or 64-APSK constellation. For instance, a Gaussian Gray type of 16-APSK and 64-APSK constellation can be chosen for all code rates.

In summary, the proposed solution comprises extending for example 16-APSK and 64-APSK modcods to modcods with lower code rate FEC rates, e.g., down to rate 1/4 or 1/5, and possibly even lower rates by using repetitions. This is done so, even though these modcods are less spectrally efficient than modcods with lower modulation orders, such as QPSK and 8-PSK. The solution may also comprise extending 64-APSK modcods to modcods with higher FEC rates that implement the modulation order for the frames of encoded and modulated symbols (hence, the first modulation order), e.g., up to FEC rate 9/10. Some modulation orders may then be dropped, such as 8-PSK, 32-APSK, 128 and 256-APSK, so that less information is given to the eavesdropper on the SNR range. Also, because of the extended modcod range, less modulation orders are needed.

A second measure that can be taken is to expand synchronization symbols having a second modulation order to the constellation of the payload, i.e., the frames of encoded and modulated symbols, hence the constellation of the first modulation order. When using QPSK payload symbols (i.e., when the SNR has not gone beyond the QEF threshold of the QPSK modcod with the highest FEC rate, e.g., 6 dB), the preamble (header) and pilot symbols can remain QPSK modulated. In this case the first and the second modulation order are the same. An eavesdropper will not detect, when only looking at the modulation order (e.g. by looking at the envelope of I/Q symbols), where the header and pilots are located compared to the payload as they are all QPSK.

16-APSK modcods are used when receivers have higher SNR conditions, e.g. at least -3 dB, or at least 0 dB, or at least 3 dB, depending on the lowest FEC rate used, hence depending on the lower bound of the SNR region allocated to 16-APSK. The S2X superframe headers were designed to work down to -10 dB and the same holds for the pilot sequences. So, this means that, at those higher SNR conditions (i.e., SNRs above the lowest QEF threshold of the 16-APSK modcods), there are some degrees of freedom available to modify the header and pilots without resulting in a performance loss. The same reasoning holds for 32-QAM, 32-APSK, 64-QAM, 64-APSK and beyond. Even stronger, the SNR conditions for these modulation orders are even better than for 16-APSK or 16-QAM so there are even more degrees of freedom.

The present invention aims to expand QPSK in the known symbols (headers and, optionally, pilots) to constellation points from the same constellation as the payload. These known symbols are in this disclosure referred to as synchronization symbols. It is shown further in this description that the legitimate receiver does not need to know that expansion is performed provided that the expansion adheres to a few conditions. It is obviously a great advantage that the legitimate receiver does not need to know which expansion is performed. This prevents leaking the expansion method to adversaries. It also allows for simpler receivers. In a preferred embodiment the expansion is performed on constellation points in the same quadrant as the original QPSK symbol, i.e., if the QPSK point before expansion has a negative I and positive Q component, the expanded point must also have a negative I and positive Q component. However, the proposed approach still works in case occasionally a constellation point is chosen that is not in the same quadrant. Another situation wherein an expansion can advantageously be employed, relates to the average phase of a sequence of expanded symbols. This will be elaborated upon further in the description.

In a specific embodiment, TRANSEC scrambling or spreading or frequency hopping is used to prevent that adversaries that got hold of the used known symbol sequences, lock on the waveform. In such case, a cryptographic module is used to generate the spreading sequences or hopping frequencies given a frame ID and a secret key.

In a more specific embodiment, the cryptographic module used for TRANSEC can also be used to generate the expansion on the transmitter side and to undo it at the receiver side. This specific embodiment is just one possible implementation of the invention. As mentioned above, it is not needed for the receiver to lock on the waveform provided that the expansion adheres to some conditions. Note that, as mentioned above, these conditions are not to be considered as strictly required for realizing the invention, as the receiver can also undo the expansion in another embodiment.

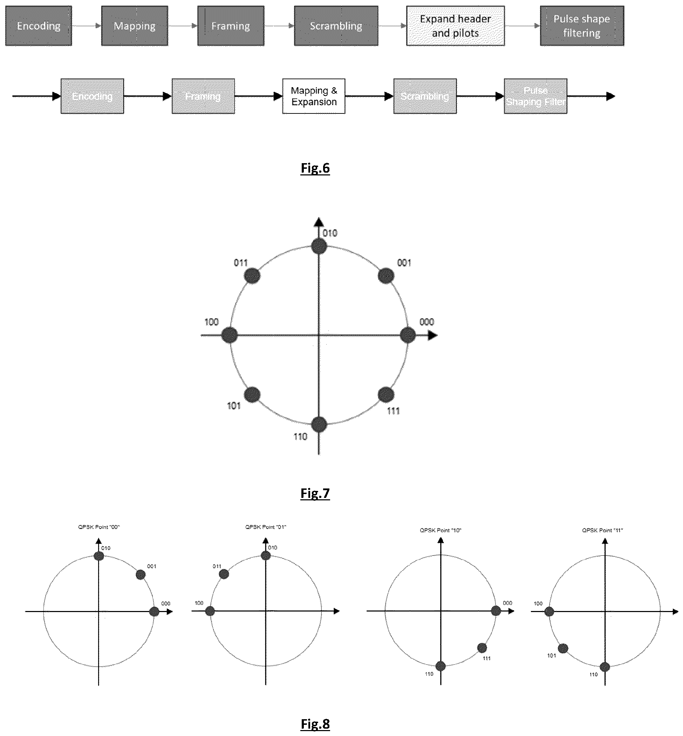

The "inclusion" of the expansion operation in the transmission scheme is illustrated in Fig.6 in different embodiments where a scrambling is performed. In one embodiment, the expansion is performed prior to the scrambling (bottom part of Fig.6), in another embodiment, it is performed after the scrambling (top part of Fig.6). Often, scrambling corresponds to performing a rotation of a multiple of pi/4. This typically does not change the constellation to which I/Q symbols belong. Hence, expansion can also be done after symbol scrambling. As can be seen in Fig.6, the order of the blocks can be changed while still achieving the same result.

The expansion operation can be seen as generating bits that allow picking a point from the (larger) payload constellation. Indeed, a QPSK symbol corresponds to 2 bits as there are 4 possible QPSK symbols. A 16-APSK symbol corresponds to 4 bits as there are 16 possible 16-APSK symbols. Hence, expanding QPSK to 16-APSK could be seen as generating two additional bits for instance. The bits should be difficult to predict by an adversary, or stated differently, the generated sequence cannot have patterns that are easy to detect. Put in other words, the constellation symbols in the expanded sequences should appear as if they result from a random picking of symbols from the payload constellation. A random picking results in a uniform probability distribution for the constellation points.

Below two examples for 8-PSK and 16-APSK are given but it can be readily seen that the same method can be used for other constellations.

*Expansion to 8-PSK*

Payload symbols are considered that use the 8-PSK constellation of Fig.7. Obviously, this is just an example, and another labelling or other constellations are possible. Fig.8 shows, per quadrant, the constellation points to which the header or pilot symbol can be expanded. As can be seen, the points on the axes appear in two quadrants. Thus, to achieve a uniform probability distribution for the constellation points, a point on the axes needs to be selected with half of the probability compared to the point on the bisector for a certain quadrant, as those points on the axes can be chosen in two quadrants. More specifically, per quadrant :

- Points labelled with "001", "011", "101", "111" have a probability of 1/2 to be picked when expanding a pilot or header symbol in their respective quadrant.
- Points labelled with "000" "010" "100" "110" have a probability of 1/4 to be picked when expanding a pilot or header symbol in their respective quadrant.

*Expansion to 16-PSK*

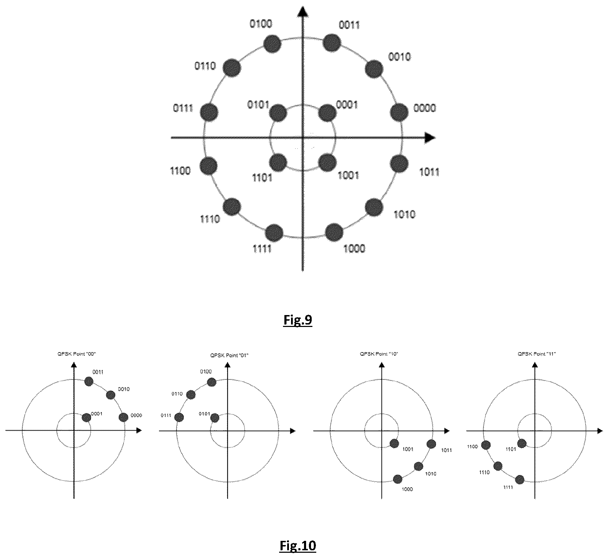

Now payload symbols are considered that use the 16-APSK constellation of Fig.9. Again, this is just an example and another labelling or other constellations are possible. Fig.10 shows, per quadrant, the constellation points to which the header or pilot symbol can be expanded. The probability of each constellation point to be picked when expanding a pilot or header symbol in the respective quadrant is 1/4.

There are many ways to select constellation points from the same quadrant as the header sequence or pilot sequence. E.g., when expanding QPSK to 16-APSK, it boils down to generating two bits with uniform probability distribution. One option is, as already mentioned, to use secure generators to generate the bits, that are impossible to detect, not even through more advanced eigenvalue detectors for instance. Sequence generation has already described in the prior art, see for example 'Obfuscating IEEE 802.15.4 communication using secret spreading codes' (B. Muntwyler et al., Proc. of the 9th Annual Conf. on Wireless On-demand Network Systems and Services (2012)). The receiver can use the same generator, and in some embodiments, upon exchanging information such as a seed, the receiver can undo the expansion.

Running a generator to generate sequences with guaranteed probability distributions while still adhering to the constraints explained below, comes with an important computational cost. This can be improved using pre-generated sequences, also denoted as table-based generators. Of course, for substantial sequence sizes of size N and large constellation sizes M, there are $M^N$ possible sequences. Storing all possible pre-generated sequences would require a lot of memory. It is therefore more interesting to store one or more (i.e., a reduced number of) sequences. The sequence generator then takes one such sequence followed by a random permutation. There are N! permutation for a sequence of size N, which can become very large. Furthermore, the stored sequences can be made such that the constraints, as specified below, are adhered to, even after a permutation. This results in a low-complex sequence generation. An example of such a table-based generator is given below.

In preferred embodiments each of the receivers can undo the expansion prior to frequency offset estimation and phase estimation. This requires the receiver to know how the transmitter has expanded the known symbols and to undo the expansion prior to performing the estimations.

A more simple method than undoing the expansion is that the receiver acts as if expansion is not performed, hence the expansion is not undone. Of course, the expansion must adhere to some constraints to avoid wrong frequency offset or phase estimations on the expanded synchronization sequence. In the frequency offset and phase estimation, the receiver correlates with the complex conjugate of the pilot or header sequence without expansion (as it acts as if the expansion is not performed). A first condition is that the average phase of the expanded sequence used for the estimation is as close as possible, or even identical in a preferred embodiment, to the average phase of the header or pilot sequence without expansion (thus with only QPSK symbols). In an embodiment, this is achieved by guaranteeing that, for every expanded symbol, there is another expanded symbol in the sequence corresponding to the mirrored constellation point with respect to the quadrant bisector. This requires the use of quadrant symmetric constellations for the payload symbols. For instance, EP2957084 discloses a method to construct such constellations. In quadrant symmetric constellations, the constellation within a quadrant is symmetric around the bisector of that quadrant.

Some receivers use two subsets of a preamble to carry out a frequency offset estimation, e.g. the first 20 symbols and the last 20 symbols, or the first 30 symbols and the last 30 symbols. In that case, the average phase of each of the expanded sequences needs to be as close as possible or even identical to the average phase of the pilot or header sequence without expansion (thus with only QPSK symbols).

Other receivers sometimes need to perform non-coherent correlations, such as the following. The entire preamble is broken into K subblocks with each S symbols. In each subblock, the S symbols are coherently correlated with the corresponding known symbols. Then K correlation results are noncoherently combined to form a detection variable. For instance, for the corner case of 1.5%-symbol rate frequency offset, S = 15 is a suitable choice. In a preferred embodiment, the average rotation added by the "expansion sequence" is as close as possible to zero over each of the length-S subblocks. This ensures there is no unintended, residual phase component in the outputs of the coherent correlations over the length-S subblocks.

Now an illustrative example is given to show how a table-based sequence generation that adheres to the above constraints can work. Consider a QPSK pilot sequence of 8 pilot symbols equal to 0 1 2 3 0 1 2 3, where each number corresponds to the integer valuation of the bit label of the QPSK symbol. This can also be considered as the quadrant number of the symbol as there are four quadrants: 0, 1, 2 and 3. Suppose this sequence needs to be expanded to a sequence of 8 symbols belonging to a 16-APSK constellation. The 16-APSK constellation symbols are labelled from 0 to 15. Further suppose that the average phase of the sequence must be zero for accurate frequency offset and phase estimation. To generate the expanded sequence, elements are read from a "permuted" version P(M) of a matrix M, as follows. Denote the original pilot sequence as {x(index), index = 0, ..., N-1} and the expanded sequence as {y(index), index = 0, ..., N-1}. Hence, in the example above, {x(index), index = 0, ..., N-1} = {0, 1, 2, 3, 0, 1, 2, 3}. Then, y(index) = P(M) (index, x(index)). The table M, which is a matrix, has the following properties:

- Each column only contains constellation points from the corresponding quadrant, i.e., column i only has constellation points from quadrant i
- the average phase of each column of M is that of the corresponding quadrant bisector, i.e., the average phase of column 0 equals $\pi/4$ (which is the phase of quadrant 0), ..., and the average phase of column 3 equals $\pi/4 + 3*\pi/2$.
- each row of M has four different points which only differ by a multiple of 90° (e.g. the second element is the first, rotated by 90°; the third element is the first, rotated by 180°, and the fourth element is the first, rotated by 270°).

P(M) is a new matrix after permuting rows from M. Note that the P(M) has the same three properties as M. For example,

M =

```
[0, 4, 8,12]
[0, 4, 8,12]
[1, 5, 9,13]
[1, 5, 9,13]
[2, 6,10,14]
[2, 6,10,14]
[3, 7,11,15]
[3, 7,11,15]
```

P(M) =

```
[0, 4, 8,12]
[1, 5, 9,13]
[3, 7,11,15]
[1, 5, 9,13]
[2, 6,10,14]

[2, 6,10,14]
[0, 4, 8,12]
[3, 7,11,15]
```

and

y(index) = [0 5 11 13 2 6 8 15] for {x(index), index = 0, ..., N-1} = {0, 1, 2, 3, 0, 1, 2, 3}.

Now the impact of the expansion on the operation at the receiver side of the satellite communication system is discussed. An embodiment is considered where the receiver does not undo the expansion operation. First the impact of the expansion on the useful signal power or level estimation is assessed. Useful signal power or level estimation is very important and is required for signal normalization and consequently adequate signal demapping and decoding, but also for noise estimation. The power is estimated by correlating with the complex conjugate of the original header or pilot sequence (or by similar equivalent methods as described in the art). Because of the expansion, the resulting power estimate is changed. However, the impact of the expansion can easily be corrected using for instance a look-up table with correction factors per payload constellation. The look-table can for instance be filled by precomputing the resulting power or level estimation for an "average" expanded sequence. In reality, the level estimated for a particular expanded pilot sequence can be different because it does not match with this 'average sequence'. But averaging out the level estimates over multiple pilot and/or header sequences leads to a correct power or level estimate. For the noise estimation, a similar solution can be put in place. Alternatively, the SNR estimation can be based on payload symbols only, e.g., by using decoder metrics such as the average number of decoder iterations needed.

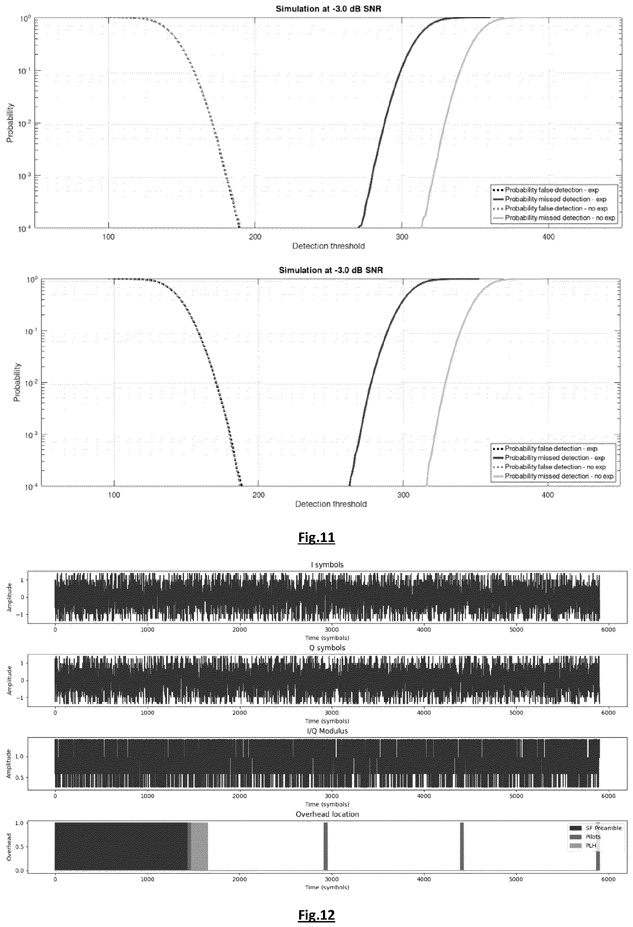

As the receiver does not know the expansion sequence, it correlates with the QPSK symbol sequence prior to expansion to detect the presence of a preamble. Fig.11 shows that the probability of missed detection and probability of false alarm are still satisfactory, in the presence of an expansion, for a 16-APSK (upper part Fig.11) and 32-APSK (lower part Fig.11) constellation. Hence, the increased degrees of freedom to modify the header and pilot symbols thanks to the higher SNR conditions are well exploited by the expansion. The simulations are performed for a detector using a coherent subblock correlation of a preamble with 720 symbols. It can be seen from Fig.11 that the probability of false detection in these examples is not affected by the "expansion" to a higher modulation order but the probability of missed detection is clearly degraded. However, the gap between the curves of probability of missed and false detection is still sufficiently large after the "expansion" to allow a good choice of detection threshold resulting in both a very low probability of miss and false detection.

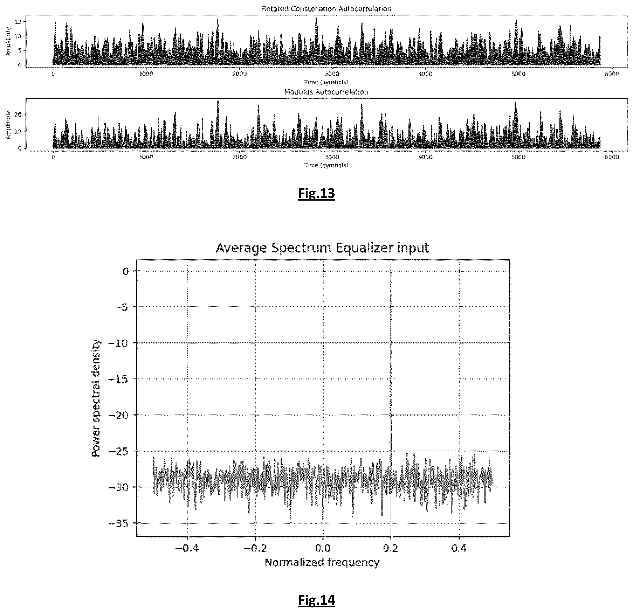

As explained previously, an I/Q envelope or autocorrelation can show the frame structure to adversaries due to the change of constellation. In Fig.12 and Fig.13 , the same metrics are shown as in Fig.2 and Fig.3 and the same signal is used as for Fig.2 and Fig.3, except that the expansion according to the invention is enabled. Thanks to the expansion, the known symbols locations cannot be retrieved from the figures. There is also no positive consistent autocorrelation between the different pilot sequences, as they are all different both by the expansion and the scrambling.

In the state of the art of SCPC (Single Channel per Carrier) technology (i.e., a carrier with a fixed or very slowly varying symbol rate that is enabled for a very long time), when the data (e.g. baseband frames) provided to the modulator, do not fill the entire carrier, dummy frames are inserted to fill the carrier. An example is found in modulators implementing the DVB-S2(X) standard insert dummy physical layer frames (PLFRAMES), see Fig.1 in ETSI EN 302 307 and Sec. 5.5.1 in ETSI EN 302 307. Dummy physical layer frames contain QPSK symbols and are not decoded by the receiver's decoder.

According to the present invention the preambles and, optionally, pilot symbols are expanded. However, expanding entire frames, including payload symbols, may be less convenient. The throughput of the expansion means in the transmitter system must then be much higher for instance. A better alternative is to fill the link with fill frames using the same constellation as the last frame with actual data frame, i.e. the last non-fill frame. It is explained in EP4498624, hereby incorporated by reference, how inserting fill frames can be achieved.

An equalizer is used to reduce intersymbol interference (ISI) due to linear distortion in the satellite channel. Linear distortions are caused by all non-ideal bandlimited filters in the transmission and reception chain, such as IMUX and OMUX filters aboard the satellite, or multipath. Deviations of transmit and receive pulses due to the finite number of taps and quantization also contribute to linear distortion.

The equalizer scheme should satisfy the following requirements: (1) fast convergence, (2) highest possible steady-state signal-to-interference-plus-noise ratio (SINR), and (3) good tracking performance. Linear equalizers are often preferred as they have lower complexity. In addition, symbol spaced equalizers operate on the I/Q symbols, after matched filtering and timing detection and decimation down to the symbol rate. This allows using shorter equalizers, which is also more attractive for complexity reasons. A CMA (constant modulus algorithm) belongs to a class of blind equalization algorithms. It attempts to keep the modulus of the signal constant by adjusting the filter coefficients. When expanding the preamble and pilots to the same constellation as the payload symbols, the modulus of the entire signal is constant, which yields a clear advantage. If this is not the case, the CMA equalizer is required to either only train pilot or preamble symbols, either only payload symbols. In fact, thanks to the expansion, the equalizer can be applied at a location in the demodulator where it is not yet known which symbols are pilot, preamble or payload symbols, e.g. just after the matched filter and timing synchronization but before performing the frame synchronization. Performing equalization can for instance remove jammers by creating a null in the spectrum.

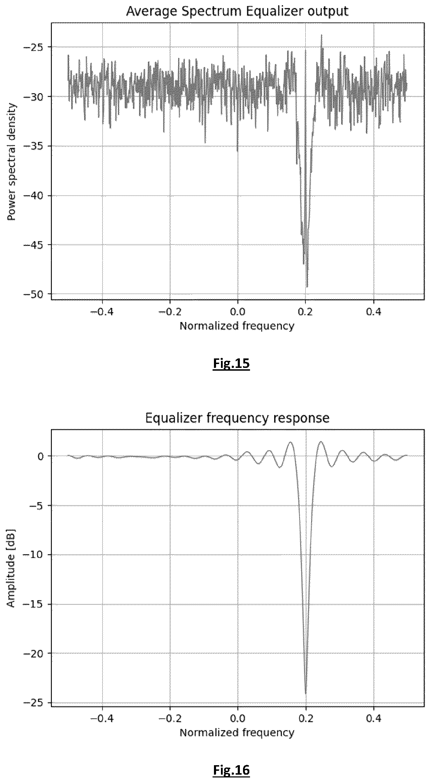

To demonstrate this, consider the following example where a narrowband carrier (e.g. a pure carrier) at a frequency right from the central frequency with the same power (hence with a power spectral density that is much higher than the useful signal as all power is concentrated on a much smaller bandwidth) than the useful signal is added to the useful signal. In Figs.14 and 15 the spectrum before and after equalization with a 32-tap CMA equalizer is shown. The frequency response the CMA equalizer converges to is shown in Fig.16. It can be seen that the equalizer creates a null at the jamming frequency to reject the interference as much as possible. Thanks to the expansion, the equalizer can be put prior to the frame synchronization which allows to reach lower signal to jammer powers as the frame synchronization will not or much less be affected by the jammer. For instance, the frame synchronization of DVB-S2 or DVB-S2X works down to -5 dB. So, when the jammer has 5 dB more power than the useful signal, the frame synchronization can already fail. However, when the equalizer filters out the jammer, the frame synchronization is successful, even for jammers with 20 dB more power than the useful signal.

While the invention has been illustrated and described in detail in the drawings and foregoing description, such illustration and description are to be considered illustrative or exemplary and not restrictive. The foregoing description details certain embodiments of the invention. It will be appreciated, however, that no matter how detailed the foregoing appears in text, the invention may be practiced in many ways. The invention is not limited to the disclosed embodiments.

Other variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

**Claims**

1.  A transmission system arranged for generating data traffic to be transmitted to one or more earth station receivers of a satellite communication system, said transmission system comprising :

    - encoding and modulation means for encoding and mapping a plurality of frames whereby in each frame a set of information bits of said data traffic is encapsulated and each frame is associated with a first modulation order and a coding rate, to a plurality of frames of encoded and modulated symbols,
    - physical layer framing means arranged for inserting synchronization symbols taken from a second modulation order into at least one of said frames of encoded and modulated symbols of said plurality, so obtaining a plurality of physical layer frames,

    **characterized by** further comprising

    - expansion means to replace, if said second modulation order is smaller than said first modulation order, at least a subset of said synchronization symbols inserted by said physical layer framing means by symbols from the same constellation as the modulated symbols in said frames of encoded and modulated symbols.

2.  The transmission system as in claim 1, wherein said symbols replacing said synchronization symbols are in a same quadrant as said synchronization symbols.

3.  The transmission system as in any of the previous claims, wherein said expansion means is arranged to ensure, when replacing said synchronization signals by symbols from the same constellation as the encoded and modulated symbols, that an average phase value of said symbols equals the phase of said synchronization signals prior to said replacing.

4. The transmission system as in claim 1, 2 or 3, wherein said constellation is quadrant symmetric.

5. The transmission system as in claim 3 or 4, wherein said expansion means is arranged to ensure that the average phase value of a first subset of said symbols replacing said synchronization symbols equals the phase of said first subset prior to the expansion and that the average phase value of a second subset of said symbols replacing said synchronization symbols equals the phase of said second subset prior to the expansion.

6. The transmission system as in any of the previous claims, comprising scrambling means to perform a scrambling operation on at least one physical layer frame of said plurality of physical layer frames before or after replacing said synchronization symbols.

7. The transmission system as in claim 6, wherein said scrambling means is arranged for generating a new scrambling every frame, based on a frame ID and a secret key.

8. The transmission system as in any of the previous claims, wherein sai9d expansion means is arranged to generate said symbol from the same constellation as said the encoded and modulated symbols by making use of a secure generator to produce additional bits.

9. The transmission system as in any of claims 1 to 7, wherein said expansion means is arranged to generate said symbol from the same constellation as said the encoded and modulated symbols by making use of one or more pre-generated sequences.

10. The transmission system as in claim 9, wherein said expansion means is arranged to store said one or more pre-generated sequences.

11. The transmission system as in claim 9 or 10, wherein said expansion means is arranged to perform a random permutation to randomize said one or more pre-generated sequences.

12. The transmission system as in any of the previous claims, wherein said encoding and modulation means is arranged to use a same M-ary constellation for modulation regardless of said coding rate.

13. The transmission system as in any of the previous claims, comprising baseband shaping and quadrature modulation means arranged for receiving a version of said plurality of physical layer frames and for modulating I/Q symbols inside said version of physical layer frames on a waveform at a configured symbol rate, thereby obtaining a signal to be transmitted, said transmission system further arranged to fill a stream of said frames of encoded and modulated symbols with one or more fill frames using a same constellation as the last frame of encoded and modulated symbols that was not a fill frame, when there is not enough traffic to reach said configured symbol rate.

14. A satellite communication system comprising a transmission system as in any of claims 1 to 13 and one or more earth station receivers.

15. The satellite communication system as in claim 14, wherein at least one of said earth station receivers is adapted to undo said replacing said at least one synchronization symbol by said symbol from the same constellation as the encoded and modulated symbols.

16. The satellite communication system as in claim 14 or 15, wherein at least one of said earth station receivers is adapted to correct a useful signal level estimation on a pre-generated sequence used to produce additional bits.

17. The satellite communication system as in claim 16, wherein said correction is performed via a pre-computed correction factor.

18. The satellite communication system as in claim 16, wherein said correction is performed by averaging out a level estimate over multiple sequences of known synchronization symbols.

Bent-pipe and on-board processing

Point-to-point channels

On-board Processing, ISLs

gNb

Feeder links for regenerative satellites

**Fig.1**

**Fig.2**

Rotated Constellation Autocorrelation

Modulus Autocorrelation

**Fig.3**

64-APSK modcods

16-APSK modcods

QPSK modcods

QEF thresholds (dB)

**Fig.4**

**Fig.5**

**Fig.6**

**Fig.7**

**Fig.8**

**Fig.9**

**Fig.10**

Fig.11

Fig.12

**Fig.13**

**Fig.14**

**Fig.15**

**Fig.16**

# EUROPEAN SEARCH REPORT

**Application Number**

EP 25 16 3441

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2015/117469 A1 (BECKER NEAL [US] ET AL) 30 April 2015 (2015-04-30) * paragraph [0033] - paragraph [0034] * * paragraph [0036] - paragraph [0038] * * paragraph [0042] - paragraph [0044] * ----- | 1-18 | INV. H04B7/185 H04H20/74 |
| A | US 2017/324468 A1 (LEE LIN-NAN [US] ET AL) 9 November 2017 (2017-11-09) * paragraph [0018] * * paragraph [0036] * * paragraph [0040] - paragraph [0041] * ----- | 1-18 | |

| | | | TECHNICAL FIELDS SEARCHED (IPC) |
|---|---|---|---|
| | | | H04B H04H |

The present search report has been drawn up for all claims

| Place of search | Date of completion of the search | Examiner |
|---|---|---|
| The Hague | 30 July 2025 | Larcinese, Annamaria |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 25 16 3441

This annex lists the patent family members relating to the patent documents cited in the above-mentioned European search report.
The members are as contained in the European Patent Office EDP file on
The European Patent Office is in no way liable for these particulars which are merely given for the purpose of information.

30-07-2025

| Patent document cited in search report | Publication date | Patent family member(s) | Publication date |
|---|---|---|---|
| US 2015117469 A1 | 30-04-2015 | BR 102014003144 A2 | 15-12-2015 |
| | | EP 2765726 A2 | 13-08-2014 |
| | | US 2014226682 A1 | 14-08-2014 |
| | | US 2015117469 A1 | 30-04-2015 |
| US 2017324468 A1 | 09-11-2017 | CA 3022824 A1 | 09-11-2017 |
| | | EP 3453123 A1 | 13-03-2019 |
| | | US 2017324468 A1 | 09-11-2017 |
| | | WO 2017192410 A1 | 09-11-2017 |

EPO FORM P0459

For more details about this annex : see Official Journal of the European Patent Office, No. 12/82

**REFERENCES CITED IN THE DESCRIPTION**

**Patent documents cited in the description**

- EP 2957084 A

- EP 4498624 A

**Non-patent literature cited in the description**

- **GUILLEN I FABREGAS et al.** *Foundations and Trends in Comm. and Inform. Theory*, 02 January 2008, vol. 5 (1)

- **B. MUNTWYLER et al.** Obfuscating IEEE 802.15.4 communication using secret spreading codes. *Proc. of the 9th Annual Conf. on Wireless On-demand Network Systems and Services*, 2012